# EUROPEAN PATENT SPECIFICATION

(11) **EP 1 081 001 B1**
(45) Date of publication and mention of the grant of the patent: **02.08.2006**
(21) Application number: 00118849.9
(22) Date of filing: 31.08.2000
(51) Int. Cl.: B60R 25/00, B60R 25/04

(54) **Method of preventing car thefts**
Verfahren zum Verhindern eines Fahrzeugdiebstahls
Procédé pour empêcher le vol d'un véhicule

(30) Priority: 03.09.1999 JP 25084299; 03.09.1999 JP 25084399
(43) Date of publication of application: 07.03.2001
(73) Proprietor: Kabushiki Kaisha MORIC, Shizuoka-ken (JP)
(72) Inventor: Enoyoshi, Masahiko, c/o Moriyama Kogyo K. K., Shuuchi-gun, Shizuoka-ken (JP); Yamamoto, Masayuki, c/o Moriyama Kogyo K. K., Shuuchi-gun, Shizuoka-ken (JP); Isoda, Naoya, c/o Moriyama Kogyo Kabushiki Kaisha, Shuuchi-gun, Shizuoka-ken (JP)
(74) Representative: TBK-Patent

(56) References cited:
- EP-A- 0 816 192
- EP-A- 0 835 790

## Description

This invention relates to a method and a device for preventing car thefts by which engine starting is prohibited with keys having no ID code that has been registered in a controller in a vehicle body.

An anti-car theft device is known in which a key cylinder and a controller are mounted on a vehicle body; for a key inserted in the key cylinder for turning on the main switch, communication is performed between an antenna mounted on the vehicle body and a transponder (transmission element) fitted in the key to determine an ID code of the key; and engine starting is allowed when the ID code coincides with an ID code which has been registered (stored) in the controller.

In such a device, the antenna is typically built in the key cylinder, and an electric wave is transmitted from this antenna to the built-in transponder in the key to supply a given amount of electric power. When a certain amount of charge in the transponder is reached, the transponder sends back a proper ID code to the antenna. The controller allows engine starting if the ID code coincides with a registered one, but prohibits engine starting, for prevention of car theft if the ID code does not coincide with the registered one.

In the conventional device, a key which is used initially when no ID code is registered, is registered as a master key. However, if a wrong key is to be registered as a master key as a result of a wrong procedure, its rectification is very troublesome. That is, the control unit is removed from the vehicle body to be sent to the factory, or a special device is used to erase all the registered ID codes, which takes a lot of time and labor.

On the other hand, the key cylinder usually contains a main switch, and when the main switch breaks down, the entire key cylinder must be replaced. In this case, since the old key is useless to the new key cylinder, it is necessary that the transponder contained in the old key is removed to be installed in a key for the new key cylinder. However, this transponder is typically replaced, with a plastic plug in the key stem being removed, therefore detachment and attachment of the plug takes time and labor and the plug is likely to be damaged, thereby lowering quality of the key as well as its commercial value.

Document EP-A-0 835 790 discloses a method and a device as set out in the preambles of claim 1 and 4, respectively. In detail, this document describes how a master key is registered when an ECU of the anti-theft device is exchanged by a new ECU. For this procedure, a specific device, namely a checker is necessary in order to register the master key of the old ECU with the new ECU.

Document EP-A-0 816 192 discloses a further anti-theft system, wherein a re-registration and deletion of a code is performed without using an exclusive tool. In particular, different modes (such as a master key code registration mode) are changed by switching an ignition switch a plurality of times consecutively within a predetermined time period and the like. Furthermore, also a door has to be opened and closed for a plurality of times.

In view of the foregoing, it is a first object of this invention to provide a method of preventing car thefts capable of effecting easy registration of a new master key to thereby save time and labor in changing a master key when a wrong master key has been registered or a key cylinder is replaced. In addition, it is a second object of this invention to provide a device for direct use in implementing this method.

According to this invention, the first and second object is achieved by a method as set out in claim 1, and alternatively by a device as set out in claim 4.

Here, a key with a specified ID code used for erasing the registered ID codes can be an old master key, or a special key (referred to as an all-clear key) provided for erasing the ID codes. The old master key may be a master key which is wrongly registered, or a master key used in the old key cylinder when the key cylinder is replaced. That is, any master keys whose ID code has been registered in the controller, can be used.

The special key (all-clear key) is a key whose ID code is registered in the controller as fixed data, that is, an inerasable ID code. A plurality of all-clear keys may be provided, for example, in the factory of the vehicle under strict control, for use of any one of these all-clear keys. The all-clear key functions if only inserted in the key cylinder, without need of switching on the main switch, so that its key slot is unnecessary.

### [Embodiment]

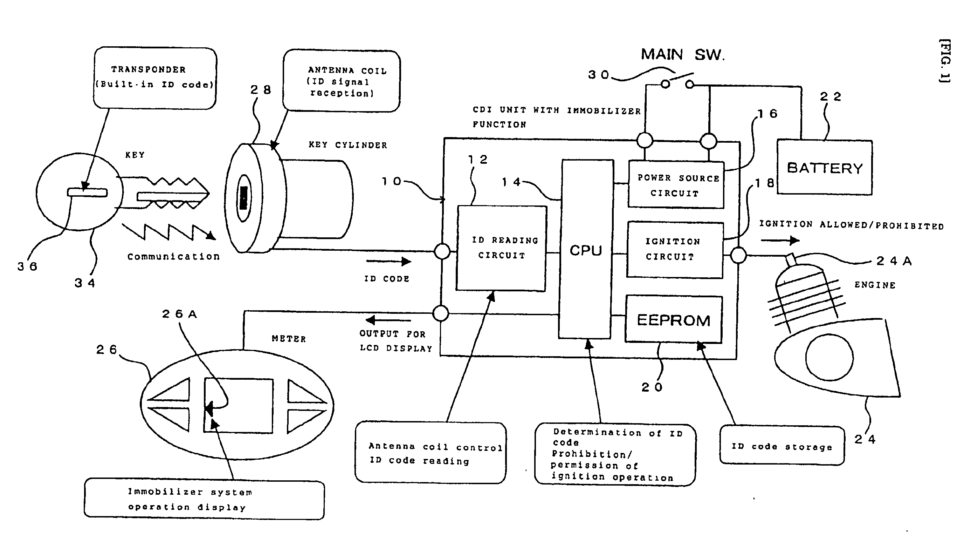

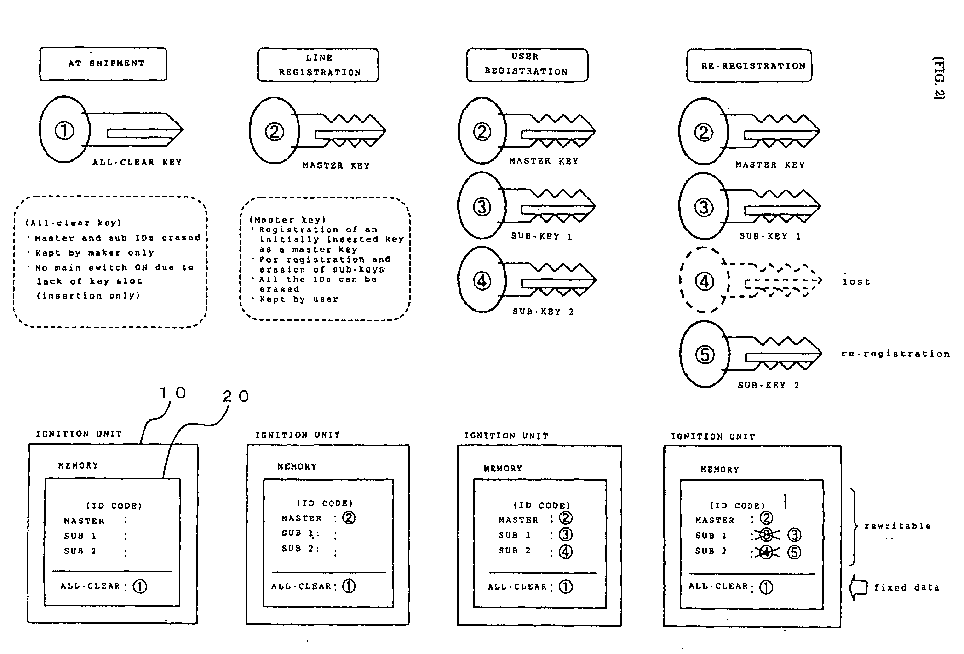

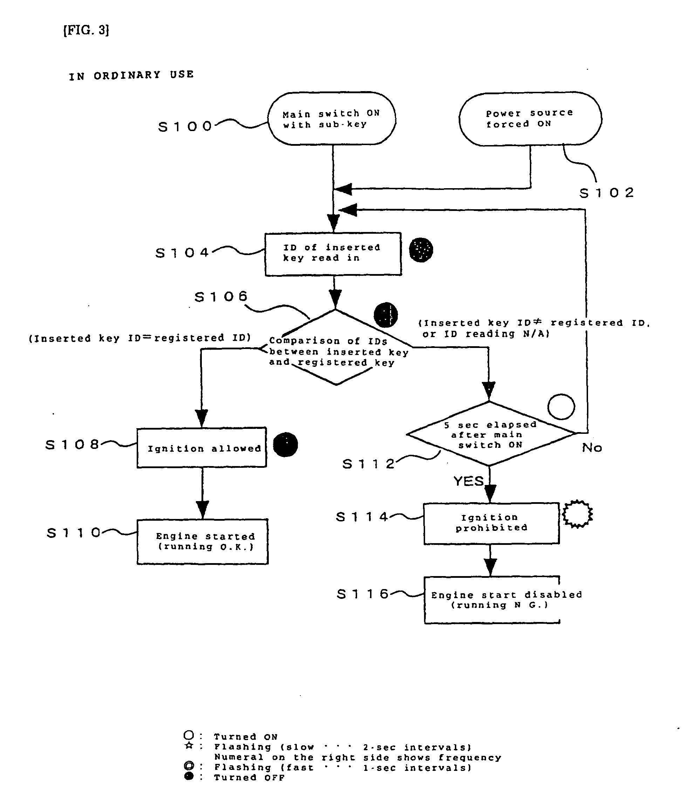

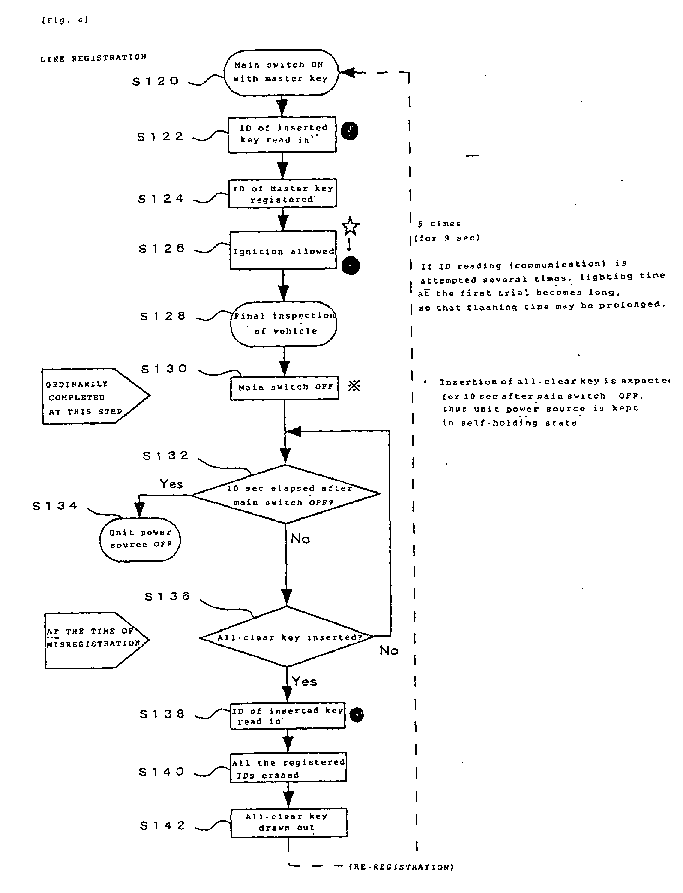

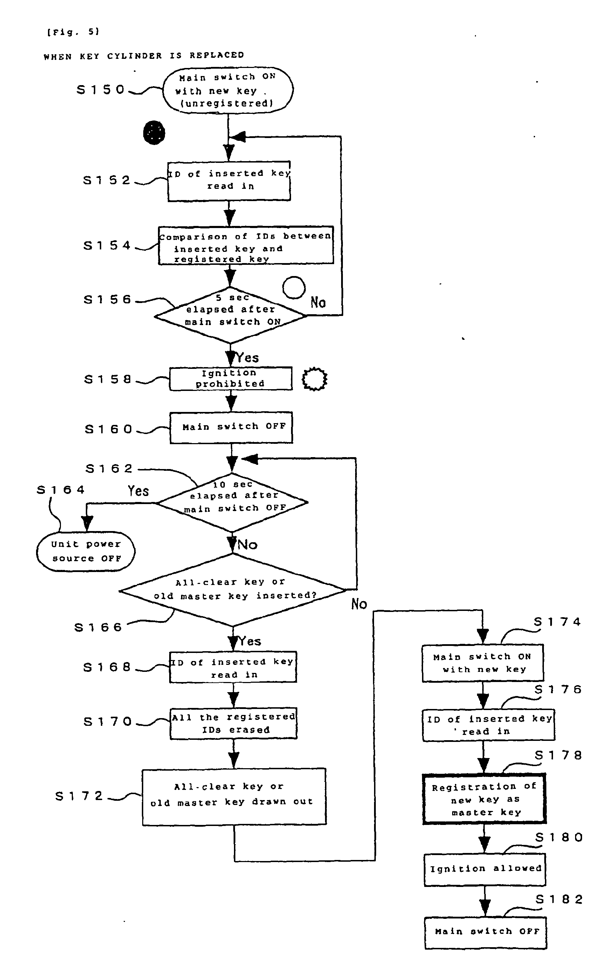

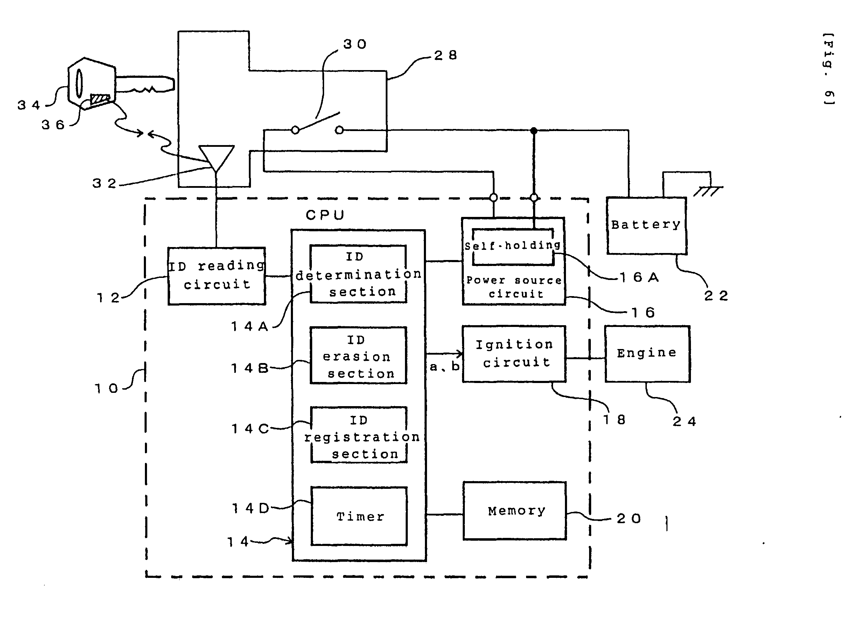

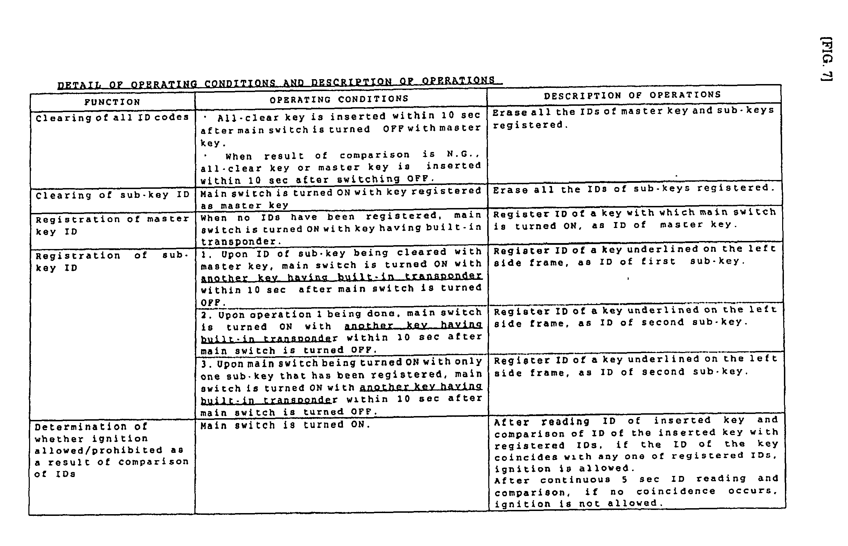

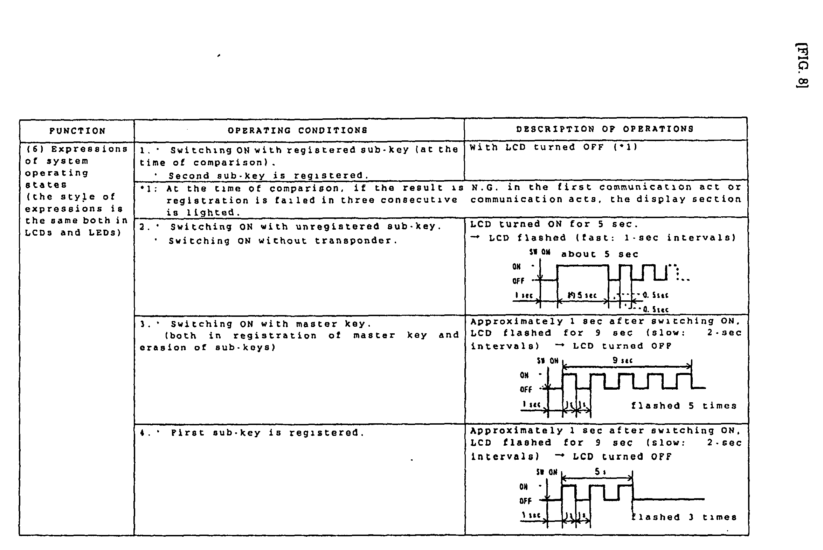

Fig. 1 is a view showing the basic structure of a system according to an embodiment of this invention; Fig. 2 a view showing a concept of registration and erasing operations of ID codes; Fig. 3 a flow diagram of operations in the ordinary use; Fig. 4 a flow diagram of operations in registration of a master key; Fig. 5 a flow diagram of operations in registering the master key when the key cylinder is replaced; Fig. 6 a view showing the structure of a controller; Fig. 7 a comparative table of operating conditions and description of operations for various functions; Fig. 8 a comparative table of the operating states of the system and their expressions; and Fig. 9 a view showing the procedure of registration of a sub-key 1.

First, the basic structure will be described with reference to Figs. 1-6, in which numeral 10 designates a controller, which comprises an ID reading circuit 12, a CPU 14, a power source circuit 16, an ignition circuit 18 and a memory 20 made up of an EEPROM (electrically erasable programmable read-only memory) etc. This controller 10 has the function of prohibiting engine starting (referred to as immobilizer function) to a key 34 having no ID code which has been registered upon communication between the controller and a built-in transponder 36 of the key.

Numeral 22 designates a battery, which supplies power to the power source circuit 16 through a main switch (represented by main SW in the figure) described later. The power source circuit 16 supplies sections of the controller 10 with respective voltages. The power source circuit 16 contains a self-holding circuit 16A capable of continuing operation of the power source circuit 16 for a given length of time even if the main switch 30 is turned off (Fig. 6)

Numeral 12 designates an engine and the ignition circuit 18 is comprised of a CDI (capacitor discharging ignition device) etc. The ignition circuit 18 generates a spark at an ignition plug 24A of the engine 24 according to an ignition signal determined under operating conditions by an ignition timing control section (not shown) in the CPU 14. The structure of the ignition circuit 18 should be changed depending on the type of engine 24, and when an electric motor is employed for the engine 24, for example, the ignition circuit 18 may be constituted by an electric circuit, such as a PWM (pulse width modification) control circuit, which is capable to change drive force of the motor. In this invention, the engine 24 is characterized by a wide sense including an electric motor etc.

The memory 20 stores ID codes or other various kinds of data, and no stored information is erased even when the power supply is cut off (main switch 30 may be turned off). However, as described later, under a certain condition, for example, when an all-clear key is used, or at the time of re-registration of a master key or sub-keys, all (ID codes of the master key and sub-keys) or some (ID codes of sub-keys) of the ID codes other than the one of the all-clear key can be erased electrically. The ID code of the all-clear key is stored unerasable as a fixed data, as described above.

In Fig. 1, Numeral 26 represents an indicator using LCDs or LEDs, which has not only meters, such as a speed meter etc, for ordinary running, but also an operation display section 26A which indicates warnings and immobilizer system operations as described later.

Numeral 28 represents a key cylinder, which contains the main switch 30 and an antenna 32 (see FIg.6). Numeral 34 represents a key, in the stem of which is embedded a transponder 36. Keys 34 with a transponder includes one master key, a sub-key 1 and a sub-key 2, but are generally referred to simply as a key 34. Also, an all-clear key is used as a special key 34, and functions of these keys 34 are described later.

When a key 34 other than the all-clear key is inserted in a key cylinder 28 and the main switch is turned on, then the power source circuit 16 begins operating and the controller 10 is activated. The ID reading circuit 12 then sends an electric wave to the key 34 through the antenna 32 by radio. When a given amount of power is stored in the transponder 36, it sends back a proper ID code to the antenna 32. The ID reading circuit 12 decodes the ID code signal and sends it to the CPU 14.

The CPU 14 has functions of an ID determination section 14A, an ID erasing section 14B, an ID registration section 14C, a timer 14D and other sections such as an ignition timing control section etc. These functions are actually constituted by pieces of software. The ID determination section 14A compares an ID code read in the ID reading circuit 12 with an ID code registered in the memory 20, and if the ID code read in the ID reading circuit 12 is determined to be the registered one in the memory 20, a signal a allowing engine starting (ignition permitting signal) is sent to the ignition circuit 18. If the ID code read in the ID reading circuit 12 does not coincide with the registered one in the memory 20, a signal which prohibits engine starting (ignition prohibiting signal) is sent to the ignition circuit 18.

The ID erasing section 14D, as described later, erases all or some of the ID codes other than the one of the all-clear key from the memory 20 at the time of alteration or re-registration of the ID codes. The ID registration section 14 registers a new ID code in the memory 20.

The controller 10 registers the ID code of the all-clear key in the memory 20 as a fixed data, which is unerasable. In the controller 10, when no other ID codes, that is, no ID codes of the master key, the sub-key 1 and the sub-key 2 are stored in the memory 20, a key 34 with a transponder which is used initially, is registered as a master key, and keys 34 with a transponder which are subsequently inserted successively according to a certain procedure, are registered as a sub-key 1 and sub-key 2, respectively.

Ordinarily, the sub-key 1 and the sub-key 2 are used. In this case, operation is shown in Fig. 3. First, the sub-key 1 or the sub-key 2 is inserted in the key cylinder 28 to be turned, causing the main switch 30 to be turned on (step S100 in Fig. 3). Then, the power source circuit 16 is forced on (step S102), and the controller 10 is activated. Then, the ID reading circuit 12 reads the ID code of the inserted sub-key (step S104), and the ID determination section 14A determines whether or not the ID code of the sub-key has been registered in the memory 20 (step S106).

[0023] IF the ID code of the inserted sub-key is a registered one, the sub-key is determined to be a regular one, an ignition permitting signal a is sent to the ignition circuit 18 (step S108), enabling the engine 24 to start (step S110). As a result, the vehicle is enabled to run. Since operation during steps S100-S110 are normal, no warnings are indicated on the operation display section 26A of the indicator 26. That is, the operation display section 26A made of LCDs or LEDs for indicating operations of the immobilizer system is neither turn on nor flashed.

[0024] If the ID code of the inserted sub-key has not been registered in the memory 20 (step S106), while the elapsed time is within 5 sec after the main switch 30 has been turned on, the operation display section 26A is lighted continuously for a given time (5 sec) (step S114), and thereafter flashed at short time intervals (period of 1 sec) (step S114), disabling engine starting (step S116). Operations in the operation display section 26 are shown in Fig. 8 by OPERATING CONDITION (2). This condition can be cancelled if the main switch 30 is turned on with a regular key 34.

Now, the procedure of registration or alteration of the master key is described with reference to Fig. 4. This procedure is usually performed when the vehicle is shipped from the factory. Here, all-clear key is used for a "key with a particular ID code" used in alteration of the master key. First, no ID codes of the master key and sub-keys have registered in the memory 20. The ID code of the all-clear key is stored as a fixed data in the memory 20.

In this condition, the master key is inserted in the key cylinder 28 and the main switch 30 is turned on (step S120 in Fig. 4). The ID reading circuit 12 reads the ID code of the master key (step S122), and the ID registration section 14C stores (that is, registers) the ID code as a master key in the memory 20 (step S 124). The CPU 14 sends an ignition permitting signal a to the ignition circuit 18 (step S126), enabling the engine 24 to start. Then, registration of the master key to the vehicle is completed, enabling shipment of the vehicle after final inspection (step S128).

When the main switch 30 is turned off to draw out the master key (step S130), the engine 24 is stopped, but the self-holding circuit 16A of the power source circuit 16 allows the controller to continue operating. Also, the elapsed time is monitored after the main switch 30 has been turned off, and when a predetermined time (10 sec) has elapsed (step S132), the self-holding circuit 16A is disconnected, the power supply of the controller 10 is cut off, and all the operation is finished (step S134).

When the all-clear key is inserted during operation of the self-holding circuit 16A (step S136), the ID code of the all-clear key is read in (step S138), and if the ID code coincides with an ID code of the all-clear key which has been stored in the memory 20, all the stored ID codes other than that of the all-clear key are erased from the memory 20 (step S140). Then, the all-clear key is drawn out, enabling re-registration of the master key (step S142). That is, another master key with a different ID code can be registered.

During steps S120-S126, transmission and reception of signals may be repeated several time for the ID code. In particular, reading of the ID code may be repeated a plurality of times when charging of the transponder 36 through the antenna 32 takes much time, or for prevention of misreading of the ID code. In such a case, the operation display section 26A is flashed at slow time intervals until an ignition permitting signal a is issued. This flashing is repeated at time intervals of 2 sec for 9 sec as shown in Fig. 8 by OPERATING CONDITION (3). That is, it is flashed 5 times.

Now, the procedure required in the case of replacement of the key cylinder 28, for example, when the key cylinder has been broken, will be described with reference to Fig. 5. In this case, information in the controller 10 or the memory 20 is not altered. Here, an old master key is used for a "key with a particular ID code." After replacement of the key cylinder 28, a new key (unregistered) with a transponder suitable for a new key cylinder 28 is inserted and the main switch 30 is turned on (step S150).

Then, the controller 10 is switched on, and the ID code of the new key inserted is read in (step S152). This ID code has not been registered in the memory 20, so that as a result of comparison (step S154), it is determined that the ID code does not coincide with a registered ID code. While the elapsed time is within 5 sec after the main switch 30 is turned on, the operation display section 26A is lighted continuously (step S156), and after 5 second, an ignition prohibiting signal b is issued, the operating display section being switched to flashing at short time intervals (step S158). These operations are shown in Fig.8 by OPERATING CONDITION (2).

In this condition, if the main switch 30 is turned off and the new key (unregistered) is drawn out (step S160), then the self-holding circuit 16A functions for 10 sec, and the controller 10 continues operating (step S162). Unless the all-clear key or the old master key is inserted during that time, that is, during the time the operation display section 26A is being flashed at short time intervals, the self-holding circuit 16A is disconnected and the power supply is cut off (step S164). If the all-clear key or the old master key is inserted during the time the operation display section 26A is being flashed at short time intervals (step S166), an ID code of the inserted key is read in (step S168). This ID code has been registered in the memory 20 of the controller 10, so that the CPU 14 erases all the registered ID codes (other than the ID code of the all-clear key) in the memory 20 (step S170).

After the all-clear key or the old key is drawn out (step S172), a new key can be registered as a master key according to a procedure similar to that of registration of a new master key as shown in Fig. 4. That is, the main switch is turned on with a new key (step S174), the ID code is read in (step S174), and this ID code is registered as an ID code of the new master key (step S178). The CPU 14 sends an ignition permitting signal a to the ignition circuit 18 to allow engine starting (step S180). After the main switch is turned off with the newly registered master key and the master key is drawn out (step S182), registration of sub-keys is performed as follows:

A sub-key 1 is registered, as described in Fig. 7 by FUNCTION (4): Registration of sub-key ID, within a predetermined time (10 sec) after the main key is drawn out, another key with a transponder is inserted and the main switch 30 is turned on. Also, a sub-key 2 is registered according to the following procedure: within a predetermined time (10 sec) after the main switch 30 is turned off with the sub-key 1 and the sub-key 2 is drawn out, another key with a transponder is inserted to turn the main switch 30 on.

Although two sub-keys 1, 2 are usually used, if either of the two sub-keys is lost, a new sub-key may be registered according to the following procedure. That is, the main switch 30 is turned on with the sub-key which is left behind, then turned off, and within a predetermined time (10 sec), a new key with a transponder is inserted to turn the main switch on. In registration of sub-keys, if the operation display section 26A is flashed five times (9 sec) at time intervals of 2 sec within a period of time during which registration is possible, it is easily confirmed that registration is possible while the operation display section 16A is being flashed. When the second sub-key is registered, the operation display section 26A is not flashed, so that it can be determined from indication on the operation display section 26A whether the first or the second sub-key is registered.

Various operations described above are shown in Fig. 7 by comparison. Fig. 2 illustrates a concept of registration/erasing of ID codes, showing that all of the ID codes stored in the memory 20 other than the one of the all-clear key are erased by the all-clear key at the time of shipment of the vehicle. A plurality of all-clear keys are preferably provided in the factory and kept by respective persons in charge. Line registration shows the procedure of registering a master key, as is shown in Fig. 4. User registration and user re-registration are described in Fig. 7 by FUNCTION (4).

Fig.8 shows description of operations displayed on the indicator 26, operating condition 1 states that in the ordinary use, for example, when the main switch 30 is turned on with a registered sub-key, or the second sub-key is to be registered, the operation display section 26A is not lighted. In this case, it is lighted if comparison is not finished in one communication act or registration is not completed in three successive communication acts. This lighting operation is changed as shown in Fig. 8, depending on the operating conditions 1-4. As a result, it becomes possible to determine from the state of lighting what is the operating state at that time.

In the invention of claim 1 as described above, a key with a transponder which is inserted initially when the ID code registered in the controller has been erased, is enabled to be registered as a master key; and after an unregistered key is inserted and the main switch is switched on, the unregistered key is drawn out without engine starting, and a key with a transponder having a specific ID code is accessed to the key cylinder within a predetermined time to thereby erase all the registered ID codes, so that a new key is enabled to be registered as a master key.

Therefore, if a key with a wrong ID code is registered as a master key, the master key can be re-registered by using a key with a specific ID code. Further, when the key cylinder is removed and replaced with another one, it is not necessary to send the controller to the factory, or to use a special device to erase the ID code registered in the memory, thereby saving time and labor. Furthermore, it is not necessary that the transponder in the old key is fitted in a new key, so that attachment and detachment of the plug for closing the housing of the transponder, becomes unnecessary, avoiding quality down of the key.

The key having a specified ID code used here can be a key whose ID code has been registered in the memory of the controller, and for example, an old key may be used (claim 2). In addition, a special key capable of easing all the ID codes other than that of the all-clear key provided in the factory, that is, the ID code which has been registered in the memory (claim 3). According to the invention of claim 4, a device for preventing car thefts for direct use in implementing the method can be achieved.

### [Brief Description of the Drawings]

Fig. 1 is a view showing the basic structure of a system according to an embodiment of this invention;
Fig. 2 is a view showing a concept of registration and erasing operations of ID codes;
Fig. 3 is a flow diagram of operations in the ordinary use;
Fig. 4 is a flow diagram of operations in registration of a master key;
Fig. 5 is a flow diagram of operations in registering the master key when the key cylinder is replaced;
Fig. 6 is a view showing the structure of a controller;
Fig. 7 is a comparative table of operating conditions and description of operations for various functions;
Fig. 8 is a comparative table of the operating states of the system and their expressions; and
Fig. 9 is a view showing the procedure of registration of a sub-key 1.

### [Symbols]

10: Controller 12: ID reading circuit 14: CPU
14A: ID determination section 14B: ID erasing section
14C: ID registration section 16: Power source circuit
16A: Self-holding circuit 20: Memory 24: Engine 26: Indicator
26A: Operation display section 28: Key cylinder 30: Main switch
32: Antenna 34: Key 36: Transponder

[Object] To provide a method of preventing car thefts capable of effecting easy registration of a new master key to thereby save time and labor in changing a master key when a wrong master key has been registered or a key cylinder is replaced, in a method of a device for preventing car thefts, when said key is inserted in said key cylinder, engine starting being allowed when the ID code detected by said transponder coincides with an ID code which has been registered in said controller.

[Structure] A key with a transponder which is inserted initially when the ID code registered in said controller has been erased, is enabled to be registered as a master key, and that after an unregistered key is inserted and the main switch is switched on, said unregistered key is drawn out without engine starting, and a key with a transponder having a specific ID code is accessed to said key cylinder within a predetermined time to thereby erase all the registered ID codes, so that a new key is enabled to be registered as a master key.

## Claims

1. A method of preventing car thefts for registration of a new master key when the key cylinder is replaced providing a key cylinder (28) and a controller (10) mounted on a vehicle body, a key (34) insertable in said key cylinder for switching on a main switch (30), and an built-in transponder (36) in said key for identifying an ID code of said key when said key is inserted in said key cylinder, engine starting being allowed when the ID code detected by said transponder coincides with an ID code which has been registered in said controller, said method **characterized in that**
a key with a transponder which is inserted initially when the ID code registered in said controller has been erased, is enabled to be registered as a new master key; and
after an unregistered key is inserted to switch on and off (S160) the main switch, said unregistered key is drawn out without engine starting, and a registered key with a transponder having a specific ID code is accessed to said key cylinder within a predetermined time (S166) to thereby erase all the registered ID codes (S170), and
thereafter, the main switch is turned on with a new key (S174), the ID code of the new key is read in (S176), and the new key is registered as the new master key (S178).

2. The method of preventing car thefts for registration of a new master key when the key cylinder is replaced of claim 1, **characterized in that** a registered key having a specified ID code is an old master key.

3. The method of preventing car thefts for registration of a new master key when the key cylinder is replaced of claim 1, **characterized in that** a registered key having a specified ID code is a special key having said specified ID code registered inerasable as fixed data in the controller and for use in erasing all other ID codes.

4. A device for preventing car thefts for registration of a new master key when the key cylinder is replaced having a key cylinder (28) and a controller (10) mounted on a vehicle body, a key (34) insertable in said key cylinder for switching on a main switch (30), and an built-in transponder (36) in said key for identifying an ID code of said key when said key is inserted in said key cylinder, engine starting being allowed when the ID code detected by said transponder coincides with an ID code which has been registered in said controller, said device comprising:
a memory (20) in which the ID code of said key is registered;
an ID reading circuit (12) for reading an ID code of a key accessing to said key cylinder; and
an ID determination section (14) for determining whether or not the ID code read by said ID reading circuit has been registered in said memory;
**characterized by**
an ID erasing section for erasing all the registered ID codes as a result of a key having a specified ID code accessing to said key cylinder within a predetermined time after an unregistered key has been inserted to switch on and off the main switch and has been drawn out when the ID determination section determines that said unregistered key is inserted; and
an ID registration section for registering as an ID code of the new master key in said memory an ID code of a key which is inserted initially after all the registered ID codes have been erased, by inserting a registered key with a transponder having a specific ID code in said key cylinder within a predetermined time.

## Patentansprüche

1. Verfahren zum Verhindern eines Fahrzeugdiebstahls beim Registrieren eines neuen Hauptschlüssels anläßlich Ersetzen des Schlüsselzylinders bei Bereitstellen eines Schlüsselzylinders (28) und einer am Fahrzeugaufbau vorgesehenen Steuerung (10), eines in den Schlüsselzylinder einzusteckenden Schlüssels (34) zum Umschalten eines Hauptschalters (30) und eines im Schlüssel integrierten Transponders (36) zum Identifizieren eines ID-Codes des Schlüssels beim Einstecken desselben in den Schlüsselzylinder, wobei der Motorstart zulässig ist, wenn der vom Transponder festgestellte ID-Code mit dem in der Steuerung registrierten ID-Code übereinstimmt,
**dadurch gekennzeichnet, daß**
ein Schlüssel mit einem Transponder, der zuerst nach Löschen des in der Steuerung registrierten ID-Codes eingesteckt wird, ermächtigt ist, als neuer Hauptschlüssel registriert zu werden; und
nachdem ein nicht registrierter Schlüssel in den Schalter eingesteckt ist, um den Hauptschalter ein- und auszuschalten (S160), der nicht registrierte Schlüssel herausgezogen wird, ohne den Motor zu starten, und ein registrierter Schlüssel mit einem Transponder mit speziellem ID-Code während einer vorbestimmten Zeit Zugang in den Schlüsselzylinder hat (S166), um **dadurch** alle registrierten ID-Codes zu löschen (S170), und daß
nach Einschalten (S174) des Hauptschalters mit einem neuen Schlüssel der ID-Code des neuen Schlüssels eingelesen (S176) und der neue Schlüssel als neuer Hauptschlüssel registriert wird (S178).

2. Verfahren zum Verhindern eines Fahrzeugdiebstahls beim Registrieren eines neuen Hauptschlüssels anläßlich Ersetzen des Schlüsselzylinders nach Anspruch 1, **dadurch gekennzeichnet, daß** ein registrierter Schlüssel mit einem speziellen ID-Code ein alter Hauptschlüssel ist.

3. Verfahren zum Verhindern eines Fahrzeugdiebstahls beim Registrieren eines neuen Hauptschlüssels anläßlich Ersetzen des Schlüsselzylinders nach Anspruch 1, **dadurch gekennzeichnet, daß** ein registrierter Schlüssel mit einem spezifizierten ID-Code ein Spezialschlüssel ist, der einen spezifizierten ID-Code hat, der unlöschbar als Festdaten in der Steuerung zur Verwendung beim Löschen aller ID-Codes dient.

4. Einrichtung zum Verhindern eines Fahrzeugdiebstahls beim Registrieren eines neuen Hauptschlüssels anläßlich Ersetzen des Schlüsselzylinders bei Bereitstellen eines Schlüsselzylinders (28) und einer am Fahrzeugaufbau vorgesehenen Steuerung (10), eines in den Schlüsselzylinder einzusteckenden Schlüssels (34) zum Umschalten eines Hauptschalters (30) und eines im Schlüssel integrierten Transponders (36) zum Identifizieren eines ID-Codes des Schlüssels beim Einstecken desselben in den Schlüsselzylinder, wobei der Motorstart zulässig ist, wenn der vom Transponder festgestellte ID-Code mit dem in der Steuerung registrierten ID-Code übereinstimmt, mit:
einem Speicher (20), in dem ein ID-Code des Schlüssels registriert ist;
einer ID-Leseschaltung (12) zum Lesen eines ID-Codes eines Schlüssel, der Zugang in den Schlüsselzylinder hat; und mit
einem ID-Bestimmungsabschnitt (14) zum Bestimmen, ob der von der ID-Leseschaltung gelesene ID-Code im Speicher registriert ist;
**gekennzeichnet durch**
einen ID-Löschabschnitt zum Löschen aller registrierten ID-Codes als Ergebnis des Eintritts eines Schlüssels mit einem spezifizierten ID-Code während einer vorbestimmten Zeit in den Zylinder, nachdem zum Ein- und Ausschalten des Hauptschalters ein nicht registrierter Schlüssel in den Schalter eingesteckt und herausgezogen worden ist, wenn der ID-Bestimmungsabschnitt bestimmt, daß der nicht registrierte Schlüssel eingesteckt ist; und **durch**
einen ID-Registrierabschnitt zum Registrieren eines ID-Codes vom neuen Hauptschlüssel im Speicher eines ID-Codes eines nach Löschen aller registrierten ID-Codes zuerst eingesteckten Schlüssels **durch** Einstecken eines registrierten Schlüssels mit einem Transponder mit einem spezifischen ID-Code während einer vorbestimmten Zeit in den Schlüsselzylinder.

## Revendications

1. Procédé pour empêcher le vol de voiture par l'enregistrement d'une nouvelle clé maître lorsque le barillet de serrure est remplacé en fournissant un barillet de serrure (28) et un contrôleur (10) monté sur une carrosserie de véhicule, une clé (34) insérable dans ledit barillet de serrure destinée à activer un interrupteur principal (30), et un transpondeur intégré (36) dans ladite clé destiné à identifier un code d'identification de ladite clé lorsque ladite clé est insérée dans ledit barillet de serrure, le démarrage du moteur étant autorisé lorsque le code d'identification détecté par ledit transpondeur coïncide avec un code d'identification qui a été enregistré dans ledit contrôleur, ledit procédé **caractérisé en ce que**
une clé avec un transpondeur qui est inséré initialement lorsque le code d'identification enregistré dans ledit contrôleur a été effacé, est autorisée à être enregistrée en tant que nouvelle clé maître ; et
après qu'une clé non enregistrée a été insérée pour activer et désactiver (S160) l'interrupteur principal, ladite clé non enregistrée est retirée sans démarrer le moteur, et une clé enregistrée avec un transpondeur ayant un code d'identification spécifique est accédée dans ledit barillet de serrure pendant une période prédéterminée (S166) pour ainsi effacer tous les codes d'identification enregistrés (S170), et
ensuite, l'interrupteur principal est activé avec une nouvelle clé (S174), le code d'identification de la nouvelle clé est lu (S176), et la nouvelle clé est enregistrée en tant que la nouvelle clé maître (S178).

2. Procédé pour empêcher le vol de voiture par l'enregistrement d'une nouvelle clé maître lorsque le barillet de serrure est remplacé selon la revendication 1, **caractérisé en ce qu'**une clé enregistrée ayant un code d'identification spécifié est une ancienne clé maître.

3. Procédé pour empêcher le vol de voiture par l'enregistrement d'une nouvelle clé maître lorsque le barillet de serrure est remplacé selon la revendication 1, **caractérisé en ce qu'**une clé enregistrée possédant un code d'identification spécifié est une clé spéciale possédant ledit code d'identification spécifié enregistré ineffaçable en tant que donnée permanente dans le contrôleur et pour utilisation dans l'effacement de tous les autres codes d'identification.

4. Dispositif pour empêcher le vol de voiture par l'enregistrement d'une nouvelle clé maître lorsque le barillet de serrure est remplacé possédant un barillet de serrure (28) et un contrôleur (10) monté sur une carrosserie de véhicule, une clé (34) insérable dans ledit barillet de serrure destinée à activer un interrupteur principal (30), et un transpondeur intégré (36) dans ladite clé destiné à identifier un code d'identification de ladite clé lorsque ladite clé est insérée dans ledit barillet de serrure, le démarrage du moteur étant autorisé lorsque le code d'identification détecté par ledit transpondeur coïncide avec un code d'identification qui a été enregistré dans ledit contrôleur, ledit dispositif comprenant :
une mémoire (20) dans laquelle le code d'identification de ladite clé est enregistré ;
un circuit de lecture d'identification (12) destiné à lire un code d'identification d'une clé accédant audit cylindre de clé ; et
une section de détermination d'identification (14) destinée à déterminer si oui ou non le code d'identification lu par ledit circuit de lecture d'identification a été enregistré dans ladite mémoire ;
**caractérisé par**
une section d'effacement d'identification destinée à effacer tous les codes d'identification enregistrés en résultat d'une clé possédant un code d'identification spécifié accédant audit barillet de serrure pendant une période prédéterminée après qu'une clé non enregistrée a été insérée pour activer et désactiver l'interrupteur principal et a été retirée lorsque la section de détermination d'identification détermine que ladite clé non-enregistrée est insérée ; et
une section d'enregistrement d'identification destinée à enregistrer en tant que code d'identification de la nouvelle clé maître dans ladite mémoire un code d'identification d'une clé qui est insérée initialement après que tous les codes d'identification enregistrés ont été effacés, en insérant une clé enregistrée avec un transpondeur ayant un code d'identification spécifique dans ledit barillet de serrure pendant une période prédéterminée.
